(19) **Europäisches Patentamt European Patent Office Office européen des brevets**

(11) **EP 4 752 524 A1**

(12) **EUROPEAN PATENT APPLICATION**

(43) Date of publication:
**03.06.2026 Bulletin 2026/23**

(21) Application number: **24216730.2**

(22) Date of filing: **02.12.2024**

(51) International Patent Classification (IPC):
***G01N 11/04*** *(2006.01)*

(52) Cooperative Patent Classification (CPC):
**G01N 11/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **MICROFLUIDICS INNOVATION CENTER 75011 Paris (FR)**

(72) Inventors:
- **SANDUBETE-LOPEZ, Juan 11100 (Cadiz) San Fernando (ES)**
- **MCMILLAN, Alexander H. 75011 Paris (FR)**
- **SIVAKUMAR, Mukesh Kumar 75011 Paris (FR)**
- **GEFFRAULT, Anatole 77690 Montigny-sur-loing (FR)**

(74) Representative: **Marconnet, Sébastien Cabinet Sébastien Marconnet 1 Quinquies rue Basse de la Terrasse (Bâtiment A) 92190 Meudon (FR)**

(54) **HYDRAULIC RC CIRCUIT-BASED VISCOMETER AND CORRESPONDING METHOD FOR MEASURING THE VISCOSITY OF A FLUID**

(57)    The invention relates to a fluid viscosity sensor comprising:
- an entrance (E1) for the fluid at initial pressure (P1),
- at least one input hydraulic resistance (R1),
- at least one hydraulic capacitance (C),
- the input hydraulic resistance (R1) being followed by the hydraulic capacitance (C),
- preferably at least one output hydraulic resistance (R2) sequentially placed after the elastic hydraulic capacitance (C),
- an output (E2) for the fluid,
- at least two pressure sensing elements (PS1, PS2), preferably three pressure sensing elements (PS1, PS2, PS3),
- a processing device (PD) configured to calculate, when a liquid flow is laminar, a time constant of the viscosity sensor, $\tau$ [s], from a temporal variation of the pressure signals from the pressure sensing elements and use said time constant to estimate the viscosity $\mu$ of the fluid flowing through the sensor following the formula $\mu = \tau (R_{1,g} + R_{2,g})/(R_{1,g}R_{2,g}C)$ [Pa·s], $R_{1,g}$ being equal to the geometrical terms of the input hydraulic resistance (R1) and $R_{2,g}$ being equal to the geometrical terms of the output hydraulic resistance (R2).

[Fig. 2]

**Description**

The present invention relates to a hydraulic RC circuit-based viscometer and a corresponding method for measuring the viscosity of a fluid.

The measurement and monitoring of fluids' viscosity are of a high relevance in many fields of application. For instance, in 2020, as reported by Kang et al. (Phaeocystis globosa Bloom Monitoring: Based on P. globosa Induced Seawater Viscosity Modification Adjacent to a Nuclear Power Plant in Qinzhou Bay, China. Journal of Ocean University of China, 19(5):1207-1220, September 2020), it was found that the mucus produced by the Phaeocystis globosa was changing the viscosity of the water close to a nuclear power plant, resulting in the blocking of the cooling water to the filtration system, with a high corresponding danger. Several systems for viscosity measurement of low sample volume, typically less than 100uL, are described in the literature. Reviews of these microfluidic viscometers, or "microviscometers", have been done by McKinley (2009), Gupta (2016) or Del Giudice (2022). The most used flow geometry is a flow in a capillary where either a known pressure drop is imposed and a flow rate is measured, or a known flow rate is imposed and a pressure drop is measured. Both techniques calculate the viscosity using the Hagen-Poiseuille equation.

Document US6158271 describes a viscometer that measures only pressure drops to compute specific viscosity. The viscometer comprises a delay volume that is used to enhance pressure drop measurements.

Document US2007068229 describes a viscometer that measures only pressure drops to compute specific viscosity. The viscometer comprises a delay volume that has a negligible impedance.

An object of the invention is to provide a viscosity sensor which can be produced cost-effectively, and which can be used to measure the viscosity of a small amount of fluid flowing through its flow-path.

Another object of the invention is to provide a viscosity sensor which can be used as a standalone viscometer or can be used as an in-line viscometer (integrated in series in a microfluidic setup).

Another object of the invention is to provide a viscosity sensor whose passive elements can be changed to optimize the system for high accuracy measurement of the application's range of viscosity.

To this end, the invention is directed to a fluid viscosity sensor comprising:

- an entrance for the fluid at initial pressure,
- at least one input hydraulic resistance,
- at least one hydraulic capacitance C with units [m3/Pa],
- the input hydraulic resistance being followed by the hydraulic capacitance, preferably at least one output hydraulic resistance sequentially placed after the hydraulic capacitance,
- an output for the fluid,
- at least two pressure sensing elements, preferably three pressure sensing elements able to measure pressures, measured in Pascals [Pa], before and after the input hydraulic resistance and before and after the output hydraulic resistance knowing that the pressure measured after the input hydraulic resistance and the pressure measured before the output hydraulic resistance are equal, and to generate corresponding pressure signals, and
- a processing device configured to calculate, when a liquid flow is laminar, a time constant of the viscosity sensor, $\tau$ [s], from a temporal variation of the pressure signals from the pressure sensing elements and use said time constant to estimate the viscosity $\mu$ of the fluid flowing through the sensor following the formula $\mu = \tau\,(R_{1,g} + R_{2,g})/(R_{1,g}R_{2,g}C)$ [Pa.s], $R_{1,g}$ being equal to the geometrical terms of the input hydraulic resistance and $R_{2,g}$ equal to the geometrical terms of the output hydraulic resistance, the units of R1,g and R2,g being [m$^{-3}$].

According to one embodiment of the invention, the processing device is configured to apply a parameters identification algorithm to the pressure signals to identify the time constant $\tau$ of the first order linear system composed of the input hydraulic resistance, the hydraulic capacitance, and the output hydraulic resistance, all sequentially connected.

According to one embodiment of the invention, the processing device is configured to apply a parameters identification algorithm to the pressure signals to identify the time constant $\tau$ of the first order linear system composed of the input hydraulic resistance, and the hydraulic capacitance, all sequentially connected.

According to one embodiment of the invention, the input hydraulic resistance, the hydraulic capacitance, and preferably the output hydraulic resistance, are easily replaceable to optimize the response of the fluid viscosity sensor according to the expected fluid viscosity range.

According to one embodiment of the invention, the hydraulic resistances comprise microcapillaries of inelastic material.

According to one embodiment of the invention,

- a first input pressure sensing element is placed at the entrance of the viscosity sensor to measure pressure,
- a second pressure sensing element is positioned preceding or following the hydraulic capacitance to measure pressure, and

- preferably a third pressure sensing element is placed at the output of the fluid to measure pressure.

According to one embodiment of the invention, the pressure sensing elements comprise semiconductor pressure sensors.

According to one embodiment of the invention, the hydraulic capacitance comprises a segment of tubing made of an elastically deformable material or alternatively a cavity containing a compressible material or a cavity containing air.

The invention also relates to a method for measuring the viscosity of a fluid wherein:

- a viscosity sensor as defined previously is provided;
- a parameters identification algorithm is applied to the pressure signals to identify the time constant, $\tau$, of the first order linear system composed of the input hydraulic resistance, the hydraulic capacitance, and the output hydraulic resistance, all sequentially connected;
- alternatively, a parameters identification algorithm is applied to the pressure signals to identify the time constant, $\tau$, of the first order linear system composed of one input hydraulic resistance, and one hydraulic capacitance, all sequentially connected;
- the calculation of viscosity of the flowing fluid as

$$\mu = \tau \, (R_{1,g} + R_{2,g}) / (R_{1,g} R_{2,g} C)$$

with measured $R_{1,g}$, $R_{2,g}$ and C and estimated constant time, $\tau$, as inputs.

According to one embodiment of the invention, the estimated constant time, $\tau$, is identified in a way that is independent of the sampling time of pressure sensors.

According to one embodiment of the invention, the method further comprises a calibration step of the hydraulic resistances using a microfluidic setup composed of:

- one pressure source,
- one reservoir containing a reference fluid of known viscosity,
- one device for flow-rate measurement,
- two pressure sensors,
- a set of connectors to sequentially connect these elements,
- one temperature sensor to adjust the viscosity value of the reference fluid,
- the geometrical terms of the j-th hydraulic resistance, $R_{j,g}$, with units [1/m3], is calculated using the Hagen-Poiseuille equation from M reference fluids, being M an integer greater than zero, as:

$$R_{j,g} = 1/M \sum_i^M [(P_{j1} - P_{2j+1}) / (Q \mu_{ref,i})] \quad .$$

According to one embodiment of the invention, the method further comprises a calibration step of the hydraulic capacitance wherein the temporal response of the viscosity sensor to pressure input signals following a step pattern is used to determine the time constant of the system, $\tau_{ref,i}$, for the i-th reference fluid of a total set of M reference fluids, being M an integer greater than zero, such that the hydraulic capacitance can be calculated as: $C = [(R_{1,g} + R_{2,g}) / (M R_{1,g} R_{2,g})] \sum_i^M [\frac{\tau_{ref,i}}{\mu_{ref,i}}]$

The invention is also directed to a microfluidic setup comprising a pressure controller, a liquid reservoir, a viscometer as previously defined and a waste, the pressure controller being able to apply pressure via an air flow channel within the liquid reservoir connected in series via a liquid flow channel with the viscometer.

The invention is also directed to microfluidic setup comprising a pressure controller, a liquid reservoir, a valve, a chip, a viscometer as previously defined and a first waste and a second waste, the pressure controller being able to apply a pressure via an air flow channel within the liquid reservoir which is connected in series, via a liquid flow channel, with the valve, the valve being able to separate the flow in two lines: a first line comprising the chip containing cells followed by the first waste, and the second line comprising the viscometer followed by the second waste.

The invention is also directed to a microfluidic setup comprising a pressure controller, a first liquid reservoir containing a first liquid, a second liquid reservoir containing a second liquid, a mixing chip, a storage volume, a viscometer as previously defined, and a waste, the pressure controller being able to apply a pressure within the first liquid reservoir and the second liquid reservoir respectively via a first air flow channel and a second air flow channel, two liquid flow channel being connected to the liquid reservoir meeting to form one liquid flow channel connected to an input of a mixing chip, the storage volume being connected to an output of the mixing chip, the viscometer comprising an entrance connected to the storage volume and an output connected to the waste.

The invention will be better understood and other characteristics and advantages will appear by reading the following detailed description, which includes embodiments given for illustrative purposes with reference to the accompanying figures, presented as way of non-limiting examples, which may serve to complete the understanding of the present invention and the description of its implementation and eventually contribute to its definition, wherein:

[Fig. 1a] [Fig. 1b] Figures 1a and 1b show respectively a descriptive hydraulic diagram of the invention and the corresponding electrical analogous circuit for the viscosity sensor according to the invention;

[Fig. 2] Figure 2 shows a hydraulic schematic of the fluid viscosity sensor according to the invention;

[Fig. 3] Figure 3 shows a microfluidic setup used for the calibration of the geometrical terms of the hydraulic resistances of the viscosity sensor according to the invention;

[Fig. 4a] [Fig. 4b] [Fig. 4c] [Fig. 4d] Figures 4a-4d shows different time responses of the viscosity sensor according to the invention;

[Fig. 5] Figure 5 shows a top view of an embodiment of a viscosity sensor according to the invention;

[Fig. 6] Figure 6 shows an example of a viscosity sensor according to the invention used in combination with a pressure controller;

[Fig. 7] Figure 7 shows the time response of the viscosity sensor according to the invention obtained with the setup of figure 6;

[Fig. 8] Figure 8 shows a semi-integrated viscosity sensor according to the invention used in combination with a chip containing cell;

[Fig. 9] Figure 9 shows a semi-integrated viscosity sensor according to the invention used in combination with a mixing chip.

It should be noted that the structural and/or functional elements common to the different embodiments have the same references. Thus, unless otherwise stated, such elements have identical structural, dimensional and physical properties.

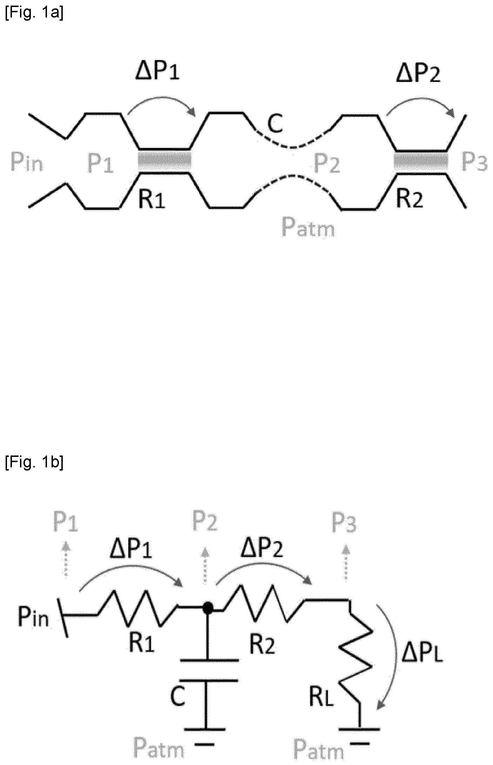

Figure 1a shows a descriptive hydraulic diagram of the invention, composed of one input capillary R1, one hydraulic capacitance C, and one output capillary R2. Figure 1b shows the corresponding electrical analogous circuit for the viscosity sensor architecture according to the invention. If the capacitance comprises compressible material, it will have an associated volume, V, related to the capacitance, C, according to: C=kV, with k being a coefficient associated with the used material.

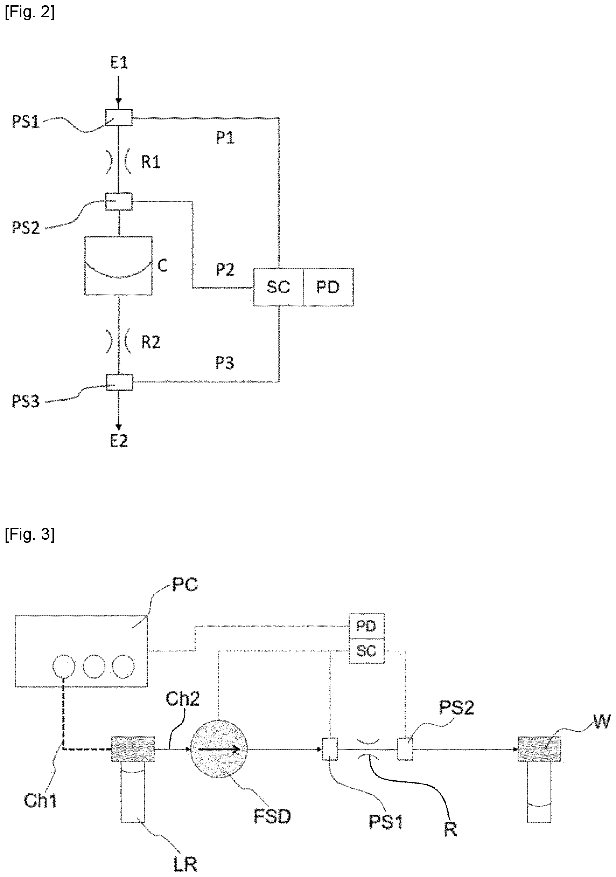

According to the invention design, the dynamic response for the charge of the hydraulic capacitance in the microfluidic viscosity measuring system can be modeled with the differential equation: $(P_2)' = (a_1 P_2 + a_2 P_2^2 + ...) + (b_1 P_1 + b_2 P_1^2 + ...)$, where $a_i$, $b_i$ with $i = 1,2, ...$ are constant parameters of the systems. If only the first terms are considered, such that $i = 1$, the response corresponds with a first order linear dynamic system. As such, if the constant parameters of the system are identified, the characteristic time constant of the system, $\tau$, can be derived from them. If the system is modeled by truncating to first order dynamics $(P_2)' = (a_1 P_2) + (b_1 P_1)$, the time constant corresponds to: $\tau = -1/a_1$. For the system described in Figures 2.a and 2.b, the parameter is calculated as: $\tau = -1/a_1 = (R_1 R_2 C)/(R_1 + R_2)$. Once $\tau$ is estimated, the viscosity can be calculated from it by applying the equations of Hagen-Poiseuille to decompose the hydraulic resistance in the product of the viscosity and the geometrical terms. For the i-th resistance with subindex "g", $R_i = \mu R_{i,g}$, leading to the expression: $\mu = \tau (R_{1,g} + P_{2,g})/(R_{1,g}R_{2,g}C)$.

The specific value of the geometrical terms of the resistances, $R_{i,g}$, as well as the capacitance $C$ are measured beforehand to be used for the calculation of the viscosity.

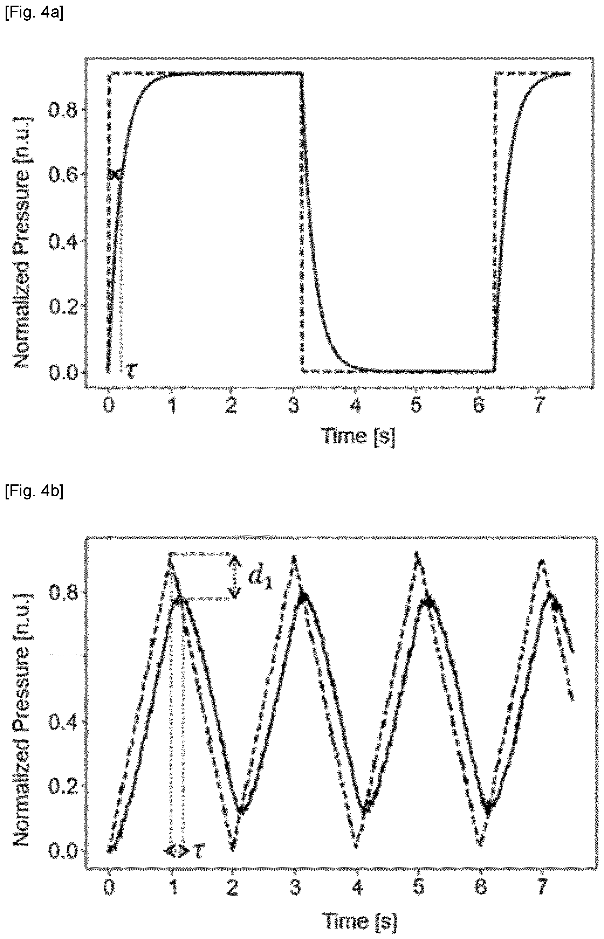

The constant parameters, and consequently the time constant, $\tau$, can be estimated from the dynamic response of the viscosity measurement system when a change in the input pressure P1 is produced and by applying an algorithm for the identification of the parameter (cf. Figures 4a-4d). The input signals for the identification algorithms are the measured signals of the pressures at the input of the viscosity sensor, P1, at the input to the capacitance, P2, and at the output of the viscosity sensor, P3. According to Figure 2, these signals pass through a signal conditioning module SC whose output is a digital signal used in the processing device PD which outputs the estimation of viscosity of the flowing fluid.

As shown in Figure 2, the viscosity sensor comprises:

- an entrance E1 for the fluid at initial pressure P1,
- an input hydraulic resistance R1 followed by an hydraulic capacitance C,
- an output hydraulic resistance R2 sequentially placed after the hydraulic capacitance C,
- an output E2 for the fluid,
- at least two pressure sensing elements PS1, PS2, preferably three pressure sensing elements PS1, PS2, PS3 to measure the pressures, measured in Pascals [Pa], before and after the input hydraulic resistances (R1) and before and after the output hydraulic resistance (R2) knowing that the pressure measured after the input hydraulic resistance R1 and the pressure measured before the output hydraulic resistance (R2) are equal, and
- a processing device PD receiving data from the pressure sensing elements PS1, PS2, PS3.

The volume flow of the fluid whose viscosity is to be determined gets introduced to the viscosity sensor through a pressure sensing element P1, towards a capillary hydraulic resistance R1. It then passes through a second pressure sensing element PS2, before flowing into the downstream hydraulic capacitance C. Before exiting the viscosity sensor, the fluid flows through a last pressure sensing element PS3. The three pressure measurements are communicated to the processing device PD for the estimation of the viscosity of the flowing fluid. The processing device PD may be associated to a signal conditioning mean SC.

The hydraulic resistances at the input and the output of the viscosity sensor limit the maximum incoming and outcoming volume flows, respectively, such that the charge and discharge dynamics can be adjusted to the desired characteristic time constant. Particularly, the second resistance R2 can be arbitrarily small, or even removed. This time constant can be selected depending on the expected range of viscosity of the fluid and the required accuracy of measurement of the viscosity. The required time constant of the system is also constrained by the sampling rate of the pressure sensing elements. The modification of the hydraulic resistances and the capacitance values allows the adaptation of the viscometer for the required accuracy and viscosity range.

A calibration is performed to determine the exact values of the hydraulic elements: R1, R2, and C. One or several reference fluids, for example, water or ethanol, whose viscosities are known beforehand, are preferably used to perform the calibration of the viscosity sensor. The values of the hydraulic resistances, R1 and R2, are calibrated using the Hagen-Poiseuille equation $\Delta P_j = Q(\mu_{ref,i} R_{j,g})$, where $\Delta P_j$ is the pressure drop over the j-th hydraulic resistance, and $\mu_{ref,i}$ is the viscosity of the i-th reference fluid.

Figure 3 shows a microfluidic setup preferably used for the calibration of the geometrical terms of the hydraulic resistances. The hydraulic resistance object of the calibration is placed between the pressure sensors PS1, PS2.

**More** specifically, the microfluidic setup comprises of a pressure controller PC applying pressure via an air flow channel CH1 within a liquid reservoir LR. The liquid reservoir LR is connected in series, via a liquid flow channel CH2, with a reference in-line flow-rate sensor FSD to estimate the flow-rate $Q$. The sensor FSD is connected in series to the target hydraulic resistance R object of the calibration. The resistance R is placed between two microfluidic pressure sensors PS1, PS2. A waste is connected in series to the resistance R.

A constant input pressure is preferably set in the range (0, 0.2) MPa. The resulting pressure drop along the resistance R is measured using the two pressure sensors. The geometrical terms of the resistances, $R1_{1,g}$ and $R2_{2,g}$, are then calculated as the average of the geometrical terms of the resistances calculated for each of the M reference fluids. For the j-th resistance:

$$R_{j,g} = 1/M \sum_i^M [(P_{j1} - P_{2j+1})/(Q\mu_{ref,i})] \qquad ,$$

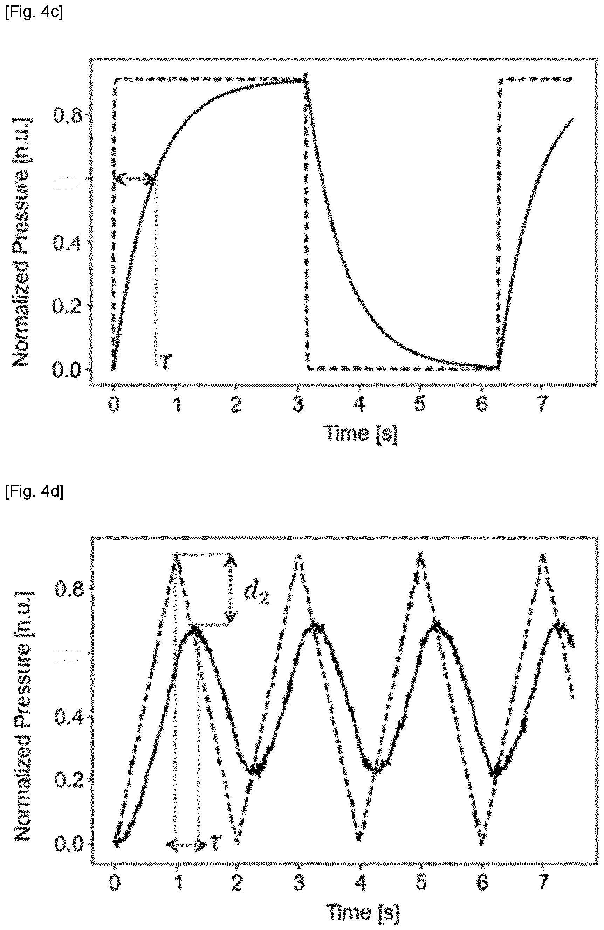

The capacitance C is calibrated from the time response of the viscosity sensor for the set of reference fluids. As previously declared, the time constant, $\tau$, of the invention is calculated as $\tau = -1/a_1 = (R_1 R_2 C)/(R_1 + R_2)$ If the system is modeled as a first order linear system, $\tau$ can be also estimated from the exponential response of the system when a step pressure signal is applied. For example, as shown in Figure 4c, $P1$ follows step input signal pattern, and $\tau$ corresponds to the time it takes for $P2$ to reach the -63.2% of the value of $P2$ in a steady state, from the moment that the input change is applied.

The process includes preferably the calculation of the time constants of the sensor, $\tau_{ref,i}$, for reference fluids. Then, the relation $C = [(R_{1,g} + R_{2,g})/ (MR_{1,g}R_{2,g})] \sum_i^M [\frac{\tau_{ref,i}}{\mu_{ref,i}}]$, where $\mu_{ref,i}$ is the viscosity of the i-th reference fluid, $R_{j,g}$ is the geometric term of the j-th hydraulic resistance, and C is the hydraulic capacitance, is calculated for each reference fluid. The final hydraulic capacitance C is calculated as the geometrical average of the capacitances calculated with each reference fluid.

According to the invention and alternatively to the analytic calculation to determine the time constant of the

viscosity sensor $\tau$ from the pressure response to any arbitrary pressure input signal, which is not necessarily periodic, different parameters identification algorithms can be used, like Least Mean Squares (LMS) or Artificial Neural Networks (ANN). In the preferred case of using ANN for the estimation of $\tau$, a dataset is created from simulations and experiments. In this dataset, short pairs of differential pressure signals of pressures, from $P1$ and $P2$, are collected together with constant parameters, $a_i$, $b_i$ with $i$ = 1,2, ..., of the corresponding differential equations that model the dynamic system which can be analytically represented in the polynomial form:$(P_2)' = (a_1 P_2 + a_2 P_2{}^2 + ...) + (b_1 P_1 + b_2 P_1{}^2 + ...)$. The ANN architecture can be implemented in the form of, for example, a recurrent neural network, for example, Long-Short Term Memory networks, of a 1D Convolutional Neural Network (1D-CNN), of a Multilayer Perceptron, or any other type or combination of these layers adapted for the application. In this regard, a 1D-CNN is preferably used. Then, a training of the ANN is performed in which a cost function is applied to optimize the weights of the ANN using the Stochastic Gradient Descent technique, or any other optimization strategy adapted for the application, such that, when a pair of signals of $P1$ and $P2$ are inserted into the ANN model, the error between the estimation of the ANN and the expected constant parameters of the corresponding dynamic system is minimized.

Figures 4a-4d show different time responses of the viscosity sensor according to the invention. Dashed lines correspond to $P1/P1_{max}$, continuous lines to $P2/P2_{max}$.

On the responses of Figures 4a and 4c, the system is exposed to a step input pressure. The pressure in the capacitor builds up to equalize, in steady state, the value of the input pressure. The time constant of the systems, $\tau$, can be calculated from this response, and it corresponds to the time it takes for $P2/P2_{max}$ to reach around 63.2% of the value of $P1/P1_{max}$ in a steady state. The fluid used for the graph of Figure 4a has a lower viscosity, resulting in a lower $\tau$, than the fluid used for the graph of Figure 4c.

Although analytic solutions for canonical signals, like the triangular signal presented in responses of figures 4b and 4d, can be used to calculate $\tau$ from the parameters ($d_1$, $t_1$, $d_2$, and $t_2$), a parameters identification algorithm is very preferably used since it is a solution to calculate $\tau$ for arbitrary input signals inserted by the user of the invention, allowing the algorithm to find the value from the temporal relations between $P1$ and $P2$, even in the case of non-canonical and noisy pressure signals.

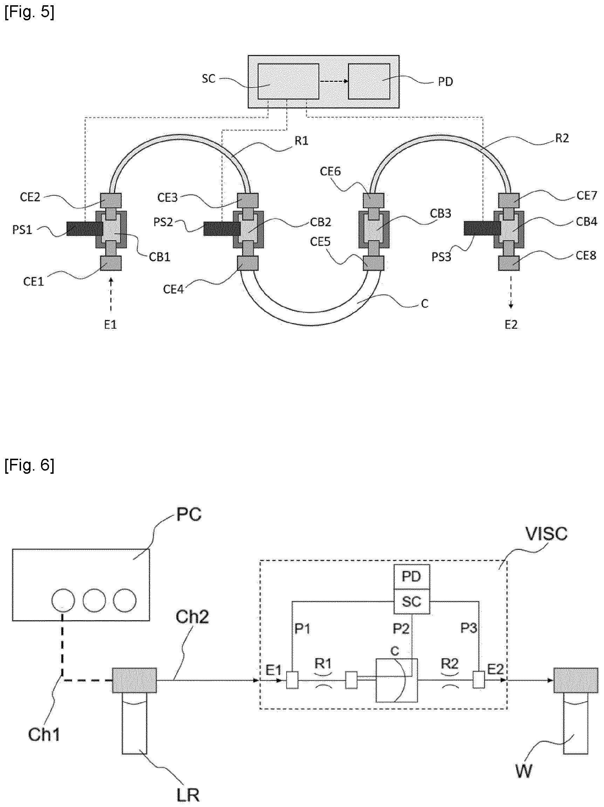

Figure 5 shows an example of an embodiment of the viscosity sensor according to the invention.

Fluid under study would be pumped into input E1 and would exit the system out of output E2 after passing through the whole flow-path. The discontinuous lines connecting the pressure sensors PS1, PS2, PS3 represent the electrical connection to the signal conditioning means SC.

A set of connecting elements CE1-CE8, for example 1/4-28 connectors or any other type of connectors adapted for the application, are used to sequentially interconnect the elements of the viscosity sensor. The connecting elements CE1-CE8 are used for plugging and unplugging the hydraulic resistances and hydraulic capacitors by hand without additional specific tools.

The connecting elements CE1-CE8 are used to plug the elements into the connection bodies CB1, CB2, CB3, CB4. For example, the connection body CB2 links the first hydraulic resistance R1 with the downstream element, the hydraulic capacitor C.

All or some of the components shown in Figure 5 are preferably fixed inside a box of a solid material, for example made of plastic or metal, having at least one input E1 and one output E2 for the fluid whose viscosity is to be measured.

The hydraulic resistances R1, R2 may comprise microcapillaries of inelastic material, for example PEEK tubing. The hydraulic capacitance C may comprise a segment of elastic material, for example silicone tubing. To achieve a good measurement accuracy, $\tau$ can be between 50ms and 100s, and the Reynolds number should stay below 2100 to keep laminar flow. To measure viscosities between 0.001 and 1 Pa.s, the hydraulic resistances can have a small internal diameter, like 20 to 500 $\mu$m, and length of 1 to 30 cm, and the hydraulic capacitance can have an internal diameter of 100 $\mu$m to 5 mm, a thickness of 50 um to 2.5 mm, and length of 1 to 30 cm. Alternatively, the hydraulic capacitance C comprises a cavity containing a compressible material or a cavity containing air.

The connecting elements CE1 to CE8 may comprise a screw having a hole along the longitudinal axis such that the fluid can flow through. The connecting elements CE1 to CE8 form a watertight link together with the connection bodies CB1 to CB4. The connection bodies CB1, CB2, CB4 can be implemented such that the pressure sensing elements PS1, PS2, PS3 can be inserted in the internal chamber of the connection bodies to measure the pressure of the flowing fluid.

The pressure sensing elements PS1, PS2, PS3 comprise preferably semiconductor devices, for example ILPS28QSW sensors (commercial reference) from ST company. The pressure sensing elements PS1-PS3 are electrically connected to the signal conditioning means SC. The pressure sensing elements PS1-PS3 transmit to the conditioning means SC the pressure signals obtained inside the connection bodies CB1-CB3 respectively.

The signal conditioning means SC may comprise a circuit board integrating digital and/or analogic electronic components, in a computer, in a microcontroller or any other calculation system adapted for the application, integrated or not in the viscosity sensor body.

The processing device PD may comprise a circuit board integrating digital and/or analogic electronic components, in a computer, in a microcontroller or any other calculation system adapted for the application, integrated or not in the viscosity sensor body. The processing device PD and the signal conditioning means SC may form the same electronic device.

The parameter identification algorithm can be implemented in the processing device PD in the form of a least mean square parameters identification of a first order linear dynamic system of the type $(P_2)' = (a_1 P_2) + (b_1 P_1)$ where $P_1$ and $P2$ are the pressure around the hydraulic resistances (R1, R2), and $(P2)'$ is the first time derivative of pressure signal $P2$. The pressure can be determined from the readings of pressure sensors PS1, PS2, PS3 in the signal conditioning means SC or processing device PD. Using the parameter identification algorithm over a historic of values of pressures P1, P2, P3, coefficients $a_1$ and $b_1$ can be estimated. In this case, using just the first order coefficients, coefficient $a_1$ is related to the time constant of the system, $\tau$, by formula: $\tau = -\Delta T/a_1$, where $\Delta T$ is the sampling time of pressure sensors (PS1, PS2, PS3).

The following examples illustrate how the invention can be used as an in-line viscometer without limiting its usage. In these examples, the invention is embodied as in Figure 5. R1 and R2 have an inner diameter of 100 um and a length of 10 cm, and C has an inner diameter of 2 mm, a thickness of 0.75 mm, and a length of 10 cm.

Example 1: Viscosity measurement with a pressure controller

**Figure** 6 shows a microfluidic setup comprising of a pressure controller PC, a liquid reservoir LR, the viscometer VISC and a waste W. In this example, the liquid reservoir LR is filled with ethanol.

The pressure controller PC applies a pressure via an air flow channel CH1 within the liquid reservoir LR which is connected in series, via a liquid flow channel CH2, with the viscometer VISC.

**A** pressure step of 0.2 MPa is applied with the pressure controller for 50s. In this example, the time constant corresponds to the time it takes for P2 to reach the -63.2% of the value of P2 in a steady state. Viscosity is then solved by equation $\mu = \tau (R_{1,g} + R_{2,g})/(R_{1,g}R_{2,g}C)$ and is found equal to 2.104 mPa.s. The viscosity was verified on a commercial viscometer and was found equal to 2.135 mPa.s. The difference between the two viscometers was 1.45%.

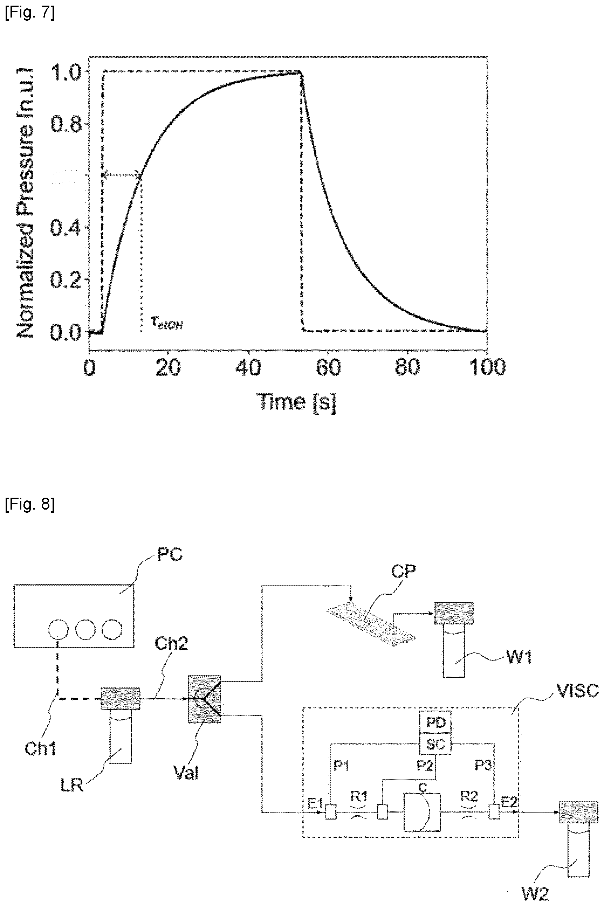

Figure 7 shows the time response of the viscosity sensor VISC obtained for the setup of Figure 6. A normalized pressure is plotted as a function of time. Dashed lines correspond to P1/P1max, continuous lines to P2/P2max, and dot lines indicate how the time constant of the tested fluid (ethanol) is found.

Example 2: Semi-integrated viscosity measurement

Figure 8 shows a microfluidic setup comprising a pressure controller PC, a liquid reservoir LR, a valve VAL, a chip CP, a viscometer VISC and two wastes W1, W2.

The pressure controller PC applies a pressure via an air flow channel CH1 within the liquid reservoir LR which is connected in series, via a liquid flow channel CH2, with the valve VAL. The valve VAL separates the flow in two lines: a first line comprising the chip CP containing cells followed by a waste W1, and the second line comprising the viscometer VISC followed by a waste W2.

The chip CP containing cells cannot be submitted to large changes of pressure. To measure the viscosity of the entering fluid, the 3/2 valve VAL is switched to have the fluid flowing through the viscometer VISC. Then, a sequence of varying pressures is sent (for example, a step of 0.2 MPa). Once the viscosity is measured, the valve VAL switches back, and the fluid of known viscosity flows back to the chip CP.

Example 3: Control of mixture with viscosity measurement

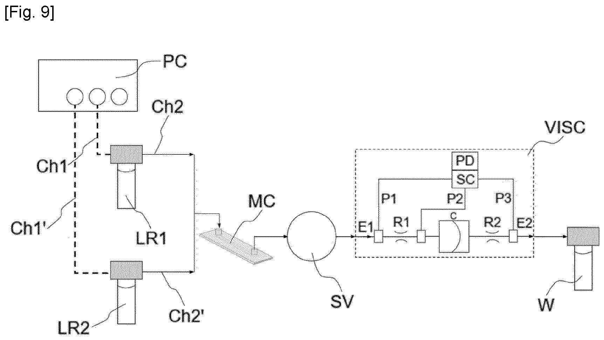

Figure 9 shows a microfluidic setup comprising a pressure controller PC, a first liquid reservoir LR1 containing a first liquid, a second liquid reservoir LR2 containing a second liquid, a mixing chip MC, a storage volume SV, a viscometer VISC and a waste W.

The pressure controller PC is able to apply a pressure within the first liquid reservoir LR1 and the second liquid reservoir LR2 respectively via a first air flow channel CH1 and a second airflow channel CH1'.

Two liquid flow channels CH2, CH2' connected to the liquid reservoirs LR1, LR2 meet to form one liquid flow channel CH3 connected to an input of a mixing chip MC. The storage volume SV is connected to an output of the mixing chip MC. The viscometer VISC comprises an entrance connected to the storage volume and an output connected to the waste W.

The first liquid and the second liquid of different viscosities are pushed at the same time from their reservoir LR1 LR2 via the respective liquid flow channel CH2, CH2' to the mixing chip MC, for a sufficient time to fill the storage volume SV. Then, a sequence of varying pressures is sent such that the volume of fluid needed to measure viscosity is less than the storage volume. The operation can be repeated with different pressures to create different mixtures. This can be done with miscible liquids or immiscible liquids, in the case of droplets formation for example.

Of course, the different characteristics, variants and/or embodiments of the present invention can be associated with each other in various combinations insofar as they are not incompatible with or exclusive of one another.

Furthermore, the invention is not limited to the embodiments described above and provided solely by way of example. It encompasses various modifications, alternative forms and other variants which a person skilled in the art may envisage in the context of the present invention and in particular any combination of the various operating modes described above may be taken separately or in combination.

**Claims**

1.  Fluid viscosity sensor **characterized in that** it comprises:

    - an entrance (E1) for the fluid at initial pressure (P1),
    - at least one input hydraulic resistance (R1),
    - at least one hydraulic capacitance (C) with units [m3/Pa],
    - the input hydraulic resistance (R1) being followed by the hydraulic capacitance (C),
    - preferably at least one output hydraulic resistance (R2) sequentially placed after the hydraulic capacitance (C),
    - an output (E2) for the fluid,
    - at least two pressure sensing elements (PS1, PS2), preferably three pressure sensing elements (PS1, PS2, PS3) able to measure pressures, measured in Pascals [Pa], before and after the input hydraulic resistance (R1) and before and after the output hydraulic resistance (R2) knowing that the pressure measured after the input hydraulic resistance R1 and the pressure measured before the output hydraulic resistance (R2) are equal, and to generate corresponding pressure signals (P1, P2, P3),
    - a processing device (PD) configured to calculate, when a liquid flow is laminar, a time constant of the viscosity sensor, $\tau$ [s], from a temporal variation of the pressure signals from the pressure sensing elements and use said time constant to estimate the viscosity $\mu$ of the fluid flowing through the sensor following the formula $\mu = \tau (R_{1,g} + R_{2,g})/(R_{1,g}R_{2,g}C)$ [Pa·s], $R_{1,g}$ being equal to the geometrical terms of the input hydraulic resistance (R1) and $R_{2,g}$ equal to the geometrical terms of the output hydraulic resistance (R2), the units of R1,g and R2,g being [m$^{-3}$].

2.  Fluid viscosity sensor according to claim 1, **characterized in that** the processing device (PD) is configured to apply a parameters identification algorithm to the pressure signals (P1, P2, P3) to identify the time constant $\tau$ of the first order linear system composed of the input hydraulic resistance (R1), the hydraulic capacitance (C), and the output hydraulic resistance (R2), all sequentially connected.

3.  Fluid sensor according to claim 1, **characterized in that** the processing device (PD) is configured to apply a parameters identification algorithm to the pressure signals (P1, P2) to identify the time constant $\tau$ of the first order linear system composed of the input hydraulic resistance (R1), and the hydraulic capacitance (C), all sequentially connected.

4.  Fluid viscosity sensor according to any of the claims 1 to 3, **characterized in that** the input hydraulic resistance (R1), the hydraulic capacitance (C), and preferably the output hydraulic resistance (R2), are easily replaceable to optimize the response of the fluid viscosity sensor according to the expected fluid viscosity range.

5.  Fluid viscosity sensor according to any of the claims 1 to 4, **characterized in that** the hydraulic resistances comprise microcapillaries of inelastic material.

6.  Fluid viscosity sensor according to any of the claims 1 to 5, **characterized in that**:

    - a first input pressure sensing element (PS1) is placed at the entrance of the viscosity sensor (E1) to measure pressure (P1),
    - a second pressure sensing element (PS2) is positioned preceding or following the hydraulic capacitance (C) to measure pressure (P2), and
    - preferably a third pressure sensing element (PS3) is placed at the output (E2) of the fluid to measure pressure (P3).

7.  Fluid viscosity sensor according to any of the claims 1 to 6, **characterized in that** the pressure sensing elements (PS1, PS2, PS3) comprise semiconductor pressure sensors.

8.  Fluid viscosity sensor according to any of the claims 1 to 7, **characterized in that** the hydraulic capacitance comprises a segment of tubing made of an elastically deformable material or alternatively a cavity containing a compressible material or a cavity containing air.

9. Method for measuring the viscosity of a fluid wherein:

- a viscosity sensor according to any of the claims 1 to 8 is provided;
- a parameters identification algorithm is applied to the pressure signals (P1, P2, P3) to identify the time constant, $\tau$, of the first order linear system composed of the input hydraulic resistance (R1), the hydraulic capacitance (C), and the output hydraulic resistance (R2), all sequentially connected;
- alternatively, a parameters identification algorithm is applied to the pressure signals (P1, P2) to identify the time constant, $\tau$, of the first order linear system composed of one input hydraulic resistance (R1), and one hydraulic capacitance (C), all sequentially connected;
- the calculation of viscosity of the flowing fluid as
$\mu = \tau \, (R_{1,g} + R_{2,g})/(R_{1,g}R_{2,g}C)$ with measured $R_{1,g}$, $R_{2,g}$ and $C$ and estimated constant time, $\tau$, as inputs.

10. Method according to claim 9, **characterized in that** the estimated constant time, $\tau$, is identified in a way that is independent of the sampling time of pressure sensors (PS1, PS2, PS3).

11. Method according to claim 9 or 10, **characterized in that** it further comprises a calibration step of the hydraulic resistances (R1, R2) using a microfluidic setup composed of:

- one pressure source,
- one reservoir containing a reference fluid of known viscosity,
- one device for flow-rate measurement,
- two pressure sensors,
- a set of connectors to sequentially connect these elements,
- one temperature sensor to adjust the viscosity value of the reference fluid,
- the geometrical terms of the j-th hydraulic resistance, $R_{j,g}$, with units [1/m3], being calculated using the Hagen-Poiseuille equation from M reference fluids, being M an integer greater than zero, as:

$$R_{j,g} = 1/M \sum_{i}^{M}[(P_{j1} - P_{2j+1})/(Q\mu_{ref,i})]$$

12. Method according to any of the claims 9 to 10, **characterized in that** it further comprises a calibration step of the hydraulic capacitance wherein the temporal response of the viscosity sensor to pressure input signals following a step pattern is used to determine the time constant of the system, $\tau_{ref,i}$ for the i-th reference fluid of a total set of M reference fluids, being M an integer greater than zero, such that the hydraulic capacitance can be calculated as: $C = [(R_{1,g} +$

$R_{2,g})/(MR_{1,g}R_{2,g})] \sum_{i}^{M}[\frac{\tau_{ref,i}}{\mu_{ref,i}}]$ .

13. Microfluidic setup comprising a pressure controller (PC), a liquid reservoir (LR), a viscometer (VISC) according to any of the claims 1 to 8 and a waste (W), the pressure controller (PC) being able to apply pressure via an air flow channel (CH1) within the liquid reservoir (LR) connected in series via a liquid flow channel (CH2) with the viscometer (VISC).

14. Microfluidic setup comprising a pressure controller (PC), a liquid reservoir (LR), a valve (VAL), a chip (CP), a viscometer (VISC) according to any of the claims 1 to 8 and a first waste (W1) and a second waste (W2), the pressure controller (PC) being able to apply a pressure via an air flow channel (CH1) within the liquid reservoir (LR) which is connected in series, via a liquid flow channel (CH2), with the valve (VAL), the valve (VAL) being able to separate the flow in two lines: a first line comprising the chip (CP) containing cells followed by the first waste (W1), and the second line comprising the viscometer (VISC) followed by the second waste (W2).

15. Microfluidic setup comprising a pressure controller (PC), a first liquid reservoir (LR1) containing a first liquid, a second liquid reservoir (LR2) containing a second liquid, a mixing chip (MC), a storage volume (SV), a viscometer (VISC) according to any of the claims 1 to 8, and a waste (W), the pressure controller (PC) being able to apply a pressure within the first liquid reservoir (LR1) and the second liquid reservoir (LR2) respectively via a first air flow channel (CH1) and a second airflow channel (CH1'), two liquid flow channel (CH2, CH2') being connected to the liquid reservoir (LR1, LR2) meeting to form one liquid flow channel (CH3) connected to an input of a mixing chip (MC), the storage volume (SV) being connected to an output of the mixing chip (MC), the viscometer (VISC) comprising an entrance connected to the storage volume and an output connected to the waste (W).

[Fig. 1a]

[Fig. 1b]

[Fig. 2]

[Fig. 3]

[Fig. 4a]

[Fig. 4b] [Fig. 4c]

[Fig. 4d]

[Fig. 5]

[Fig. 6]

[Fig. 7]

[Fig. 8]

[Fig. 9]

**EP 4 752 524 A1**

Europäisches
Patentamt
European
Patent Office
Office européen
des brevets

# EUROPEAN SEARCH REPORT

**Application Number**

EP 24 21 6730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RU 2 196 317 C2 (BEZRUKOV VIKTOR IVANOVICH; SPIRIDONOV VLADIMIR DMITRIEVIC) 10 January 2003 (2003-01-10) * the whole document * ----- | 1-15 | INV. G01N11/04 |
| A | US 6 938 463 B2 (DISETRONIC LICENSING AG [CH]) 6 September 2005 (2005-09-06) * column 2, line 45 - column 3, line 37 * ----- | 1-15 | |
| A,D | US 6 276 195 B1 (DE CORRAL JOSE LUIS [US]) 21 August 2001 (2001-08-21) * the whole document * ----- | 1-15 | |

| | |
|---|---|
| | **TECHNICAL FIELDS SEARCHED (IPC)** |
| | G01N |

The present search report has been drawn up for all claims

| Place of search | Date of completion of the search | Examiner |
|---|---|---|
| The Hague | 5 June 2025 | Werth, Jochen |

EPO FORM 1503 03.82 (P04C01)

## ANNEX TO THE EUROPEAN SEARCH REPORT
## ON EUROPEAN PATENT APPLICATION NO.

EP 24 21 6730

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2025

| Patent document cited in search report | | Publication date | Patent family member(s) | | Publication date |
|---|---|---|---|---|---|
| RU 2196317 | C2 | 10-01-2003 | RU | 2196317 C2 | 10-01-2003 |
| | | | WO | 2004001391 A1 | 31-12-2003 |
| US 6938463 | B2 | 06-09-2005 | AU | 3355501 A | 12-09-2001 |
| | | | DE | 10010539 A1 | 13-09-2001 |
| | | | US | 2003054560 A1 | 20-03-2003 |
| | | | US | 2004221643 A1 | 11-11-2004 |
| | | | WO | 0165233 A1 | 07-09-2001 |
| US 6276195 | B1 | 21-08-2001 | AU | 2059997 A | 16-09-1997 |
| | | | EP | 0823048 A1 | 11-02-1998 |
| | | | EP | 1840554 A2 | 03-10-2007 |
| | | | JP | 4077879 B2 | 23-04-2008 |
| | | | JP | H11514744 A | 14-12-1999 |
| | | | US | 5637790 A | 10-06-1997 |
| | | | US | 6158271 A | 12-12-2000 |
| | | | US | 6276195 B1 | 21-08-2001 |
| | | | WO | 9732192 A2 | 04-09-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6158271 A

- US 2007068229 A

**Non-patent literature cited in the description**

- **KANG et al.** Phaeocystis globosa Bloom Monitoring: Based on P. globosa Induced Seawater Viscosity Modification Adjacent to a Nuclear Power Plant in Qinzhou Bay, China. *Journal of Ocean University of China*, September 2020, vol. 19 (5), 1207-1220